# EUROPEAN PATENT APPLICATION

(11) **EP 0 725 218 A1**
(43) Date of publication of application: **07.08.1996**
(21) Application number: 96850012.4
(22) Date of filing: 29.01.1996
(51) Int. Cl.: F16B 7/04

(54) **Connector device**

(30) Priority: 31.01.1995 SE 9500344
(71) Applicant: FlexLink Systems Aktiebolag, 415 50 Göteborg (SE)
(72) Inventor: Gunnar, Karl A., Pihl., Bournsmouth BH6 3QS (GB)
(74) Representative: Westman, P. Börje I.

(57) **Abstract**

A connector device (1) for interconnecting frame-work profiles (11, 18) provided with internal hollow channels (19) and at least one T-shaped longitudinal slot (20, 21) in end-to-end and end-to-sideface relations, said connector having an opening (6) for an element (24) intended to be firmly attachable to a first profile (11) in end-to-end relation thereto, wherein said connector device (1) is further equipped with an opening (7) for a T-connector member (13), having a thin element (14) adapted to pass through the T-shaped longi-tudinal slot (21) in a first position, and to be broader than said slot (21) in a second position, thereby being trapped in a cavity in the interior of said profile (18) behind said slot (21), said T-connector member (13) having means (25) for moving said T-connector member (13) from said first to said second position, with aid of members (16) operable from the exterior of said connector device (1).

## Description

The present invention refers to a connector device intended mainly for interconnecting profiles for frameworks of different kinds.

Frameworks for different purposes, such as apparatus cubicles, protective covers, etcetera, preferably comprise hollow profiles of a proper material, such as aluminum or plastics, which are interconnected to form said frameworks, wherein different types of panels, doors, etcetera are fitted. For interconnecting such profiles in end-to-end relation connectors have been used having screw means provided to be screwed in into hollow channels in the profiles. For effecting interconnection in transverse direction, i.e. end-to-sideface relation, it has been used profiles having T-shaped longitudinal slots in their side faces, whereby the connector has been equipped with a locking key arranged to be positioned in the T-slot in such a manner that it can not be pulled out of the T-slot.

Such framework systems are expedient and easy to handle. The purpose of the present invention is to provide an improved connector device for such a framework, and the aim is to provide a connector device further simplifying the handling and this has been achieved in that the connector device has been given the features defined in the accompanying claims.

The invention hereinafter will be further described by way of a non-limiting example with reference to the accompanying drawings.
Fig. 1 shows in perspective a connector device according to the invention,
Fig. 2 is a perspective view showing the connector device according to Fig. 1 fitted to a frame-work profile in the longitudinal direction thereof,
Fig. 3 illustrates in perspective a connector device according to the invention fitted in longitudinal direction to a first frame-work profile, and also in transverse direction to a second frame-work profile.
Fig. 4 shows the connecting device of Fig. 1 in an inverted end view as compared to the short end visible in Fig. 1,
Fig. 5 is an end view from the opposite short side of the connector device of Fig. 4,
Fig. 6 is a side view of the connector device of Fig. 4,
Fig. 7 shows in a longitudinal section along line VII-VII in Fig. 4 the connector device according to the invention coupled in longitudinal direction to a first frame-work profile, and in transverse direction to a second frame-work profile,
Fig. 8 shows in perspective a T-connector member forming part of the connector device according to the invention,
Fig. 9 is a side view of the T-connector member of Fig. 8, and
Fig. 10 is an end view of the T-connector.

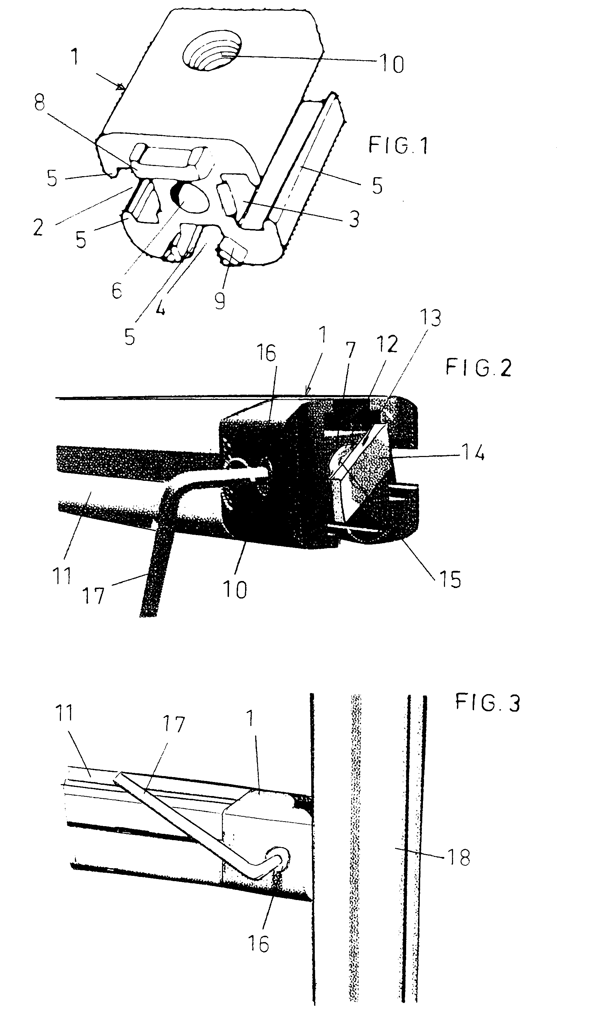

The connector device 1 shown in perspective in Fig. 1 is basically a parallel-epipedic member having in each one of three longitudinal side surfaces, a longitudinal groove 2, 3, 4. Each one of these longitudinal grooves are provided with side ledgers 5 positioned adjacent the external surface and projecting towards each other thus that each groove will have a wider bottom portion than its entrance portion, i.e. thereby forming a longitudinal T-slot.

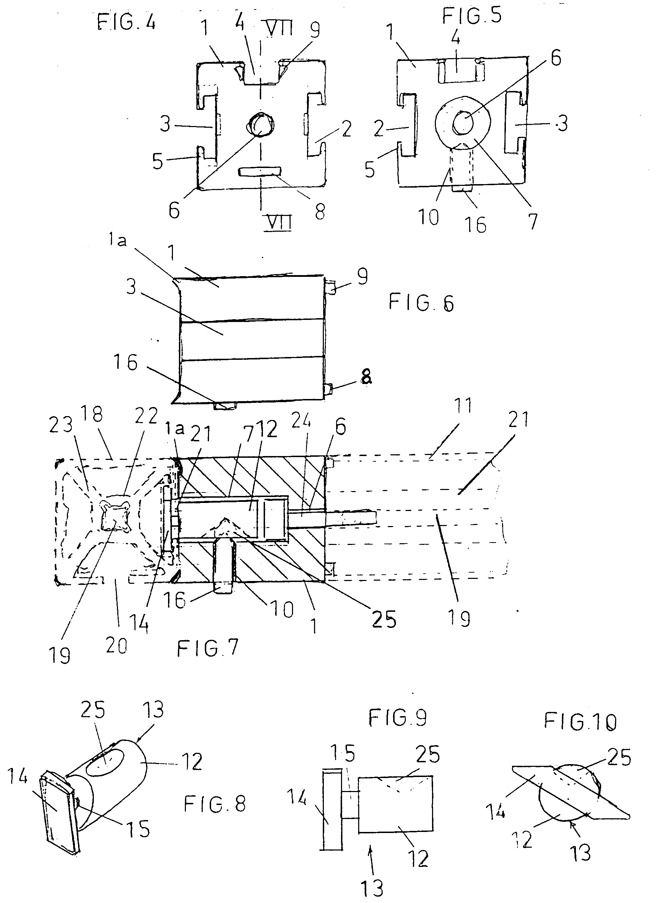

A centrally disposed bore 6 extends in the longitudinal direction through the connector device from one short end there of and as seen e.g. in Fig. 7, this bore at a distance from the end wall visible in Fig. 1, continues in a concentric bore portion 7 of substantially larger diameter.

The end surface visible in Fig. 1 is provided with a number of projections 8, 9 protruding out from the connector device 1 in its longitudinal direction, and the function of which shall be further described hereinafter. In the longitudinal surface which is not equipped with a longitudinal groove, there is arranged a threaded bore 10 extending through the material of the connector and opening in the enlarged portion 7 of bore 6.

In Fig. 2 is shown how the connector device 1 according to the invention has been attached in end-to-end relation to a first frame-work profile 11, thus that it projects in longitudinal direction from this. The connector device 1 is secured to the first profile 11 in a manner to be described hereinafter in connection with Fig. 7. In the wider central bore portion 7 of the connector device 1 there has been inserted a cylindrical body 12 of a T-connector member 13, having a rhombic, thin element 14 fitted thereto via a short shaft member 15 of small diameter. In the threaded bore 10 of the connector device 1 is received a set screw 16, which via a key 17, can be caused to act upon the cylindrical body 12 of the T-connector member 13 in a manner and for a purpose described later on.

In Fig. 3 is shown how the connector device 1 fitted in the manner shown in Fig. 2 end-to-end to said first frame-work profile 11 also is fitted with its opposite end and the rhombic T-connector situated there to a second frame-work profile 18 in the transverse direction of the latter, in a manner to be decscribed in the following.

Fig. 4 shows the connector device 1 in an end view from the end visible in Fig. 1. The image is inverted in comparison to Fig. 1. All elements appearing in this view have been given the same reference numerals as corresponding elements in the view according to Fig. 1. Fig. 5 shows the connector device from the opposite end view as compared to Fig. 4, and from this view can be seen the bigger bore portion 7 and the adjoining bore portion 6 of smaller diameter. In this view is further shown in dash-lines the extension of the threaded bore 10 and the set screw 16, that has been partly screwed into this bore, thus that the tip of the set screw projects into the cavity of the bore 7. Fig. 6 shows the connector device 1 in a planar view as seen from the left hand side of Fig. 4, and with the set screw 16 inserted in its bore. From this view can further be seen how the short end of the connector device 1, not provided with the guiding projections 8, 9, has ridge-wise projecting side edges 1a.

Fig. 7 shows in section along line VII-VII in Fig. 4 the conector device 1 according to the invention, when fitted in end-to-end relation with a first frame-work profile member 11 and in in transverse direction to a second frame-work profile member 18, which frame-work members 11, 18 are both intimated in dash lines. Both profiles 11, 18 are preferably identic in shape and both have a centrally disposed through-opening 19 extending in the longitudinal direction of the profile. The outer cross-section of the profile 11, 18 is generally parallel-epipedic and corresponds in shape and size to that of the connector device 1. Centrally disposed in at least one of the longitudinal side walls of the profile 11, 18 is a longitudinal opening 20, 21 and resembling to the openings 2, 3, 4 in the connector device 1. In the embodiment of the profile intimated, the centrally disposed through-opening is provided in a central boss-like formation 22, which via oblique strut members 23 is connected to the corners of the shell-like outer wall of the profile member. Thus it is possible, easily to punch out such slot-formed longitudinal openings in as many longitudinal side surfaces of the profile as is desireable for each specific need. The edge projections 1a, referred to in connection with Fig. 6, are adapted to fit closely to the outer, somewhat rounded contour of the profile 18, thereby providing in mounted position an engagement ascertaining that the connector device and the profile can not move angularly relative to each other.

The material of the profiles 11, 18 or at least the boss-formed central portion 22, is such that a self-tapping screw can easily be screwed into the opening 19 of the boss 22. Such materials may be aluminium, plastics, etcetera.

In the right hand part of Fig. 7 is shown how the connector device 1 is connected to the first one 11 of said frame-work profiles in end-to-end relation, i.e. with the end face of the profile 11 facing the end wall of the connector device 1 provided with said projecting formations 8, 9. In the bore 6, 7 of the connector device is introduced a self-tapping screw or bolt 24, having a stem somewhat smaller than the small diameter portion 6 of the bore and a head of a diameter bigger than that of the small diameter bore portion 6 and smaller than the diameter of the larger diameter portion of the bore 7. This screw or bolt 24, when thus inserted in the bore 6, 7, will project with its threaded end out through the opening of the bore 6, whereby it can be screwed into the opening 19 of profile 11, thereby being fixedly connected to this. When the connector device 1 and the profile are matched together before the bolt is tightened or during this operation, the projections 8, 9 are used to guide and centre the members relative to each other, the projections thereby entering into the free spaces in the interior of the profile.

As can be seen in the left hand portion of Fig. 7 the connector device can also be connected to the longitudinal side of a profile 18, i.e. in transvere relation thereto.

For this purpose is used a T-connector member 13, which is shown in Fig.s 8-10 in perspective, in side elevation and in end view, resp.

This T-connector member 13 comprises a cylindrical, short body portion 12 dimensioned thus that the body portion can be rotatably inserted in the larger bore portion 7 of the connector device 1. A short shaft member 15 projects from one side face of the cylindrical body 12 and this shaft member at its opposite end is provided with a thin, rhombic element 14. In the envelope surface of the cylindric body 12 is provided a tapering bore 25.

The thin rhombic element 14 and the tapering bore 25 of the T-connector member 13 are positioned thus relative each other that the axis of the bore 25 and the side surface of the element 14 are disposed at an oblique angle to each other.

As can be seen in Fig. 7 the rhombic element 14 is inserted in the T-slot opening 21 in the second profile member 18, which can be made when the long side surfaces of the rhombic member are positioned substantially in parallel with the side edges of the opening 21. In this position the axis of the tapering bore 25 in the cylindrical body 12 of the T-connector member 13 has a direction different from that of the axis of the threaded bore 10 in the connector device 1. As the set screw 16 is screwed into bore 16, the pointed tip of the set screw will begin to act upon the surface of the tapering bore 25, thereby causing the cylindrical body 12 of the T-connector member 13 to make an angular rotational movement in the bore 7 in the connector device 1, whereby the thin rhombic element 14 is moved thus in the T-slot opening 21 that its longitudinal side edges are no longer parallel with the opening edges, thereby preventing the T-connector member 13 from being pulled out of the longitudinal opening 21 in the second profile 18. As the set screw is screwed in to its innermost position the pointed end thereof will enter into the tapering bore 25 in the cylindrical body 12 and eventually lock this in position, thereby providing a safe and secure grip between the connector device 1 and the profile in end-to-end relation as well as in transverse relation such as described hereinbefore.

With this design of the connector device according to the invention, different connecting facilities have been combined in a single connector device thereby simplifying handling and storing thereof.

When the connector device 1 shall be fitted in end-to-end relation to a first profile 11, as mentioned above, the projections 8, 9 of the connector device are positioned thus that they guide the connector device relative to the profile, thereby projecting into the internal cavities of the profile. The self-tapping screw 24 then is inserted through the central bore 6, 7 and is screwed into the central channel 19 of the profile, thereby affixing the connector device securely to the said first profile.

Thereupon the T-connector member 13 is inserted in the bore 7 with its thin rhombic element 14 and its shaft member 15 projecting from the free end of bore 7. The thin rhombic element 14 is positioned thus that it has its two parallel long sides substantially aligned with the edges of the T-slot opening 21 in a second profile 18, thereby being able to enter into the cavity behind the opening 21. In this position of the T-connector member 13, the tapering bore 25 in the cylindrical body thereof is positioned with its axis at an angle to the threaded bore 10 in the connecting device 10. As the set screw 16 is then begun to be tightened, the pointed tip thereof will contact the tapering wall of the bore 25 and as the set screw is screwed further in this interaction will cause the cylindric body 12 to move until the axis of the tapering bore 25 is substantially aligned with the axis of bore 10. In this position the thin rhombic element 14 is located thus that its parallel long sides are positioned at an angle to the edges of the opening 21, thereby effectively securing the connector to the second profile 18 and firmly interconnecting the two profiles.

The invention is not limited to the embodiment shown in the accompanying drawings and described with reference thereto but modifications and variantions are possible within the scope of the appended claims.

## Claims

1. A connector device (1) for interconnecting frame-work profiles (11, 18) provided with internal hollow channels (19) and at least one T-shaped longitudinal slot (20, 21) in end-to-end and end-to-sideface relations, said connector having an opening (6) for an element (24) intended to be firmly attachable to a first profile (11) in end-to-end relation thereto,
**characterized therein**,
that said connector device (1) is further equipped with an opening (7) for a T-connector member (13), having a thin element (14) adapted to pass through the T-shaped longitudinal slot (21) in a first position, and to be broader than said slot (21) in a second position, thereby being trapped in a cavity in the interior of said profile (18) behind said slot (21), said T-connector member (13) having means (25) for moving said T-connector member (13) from said first to said second position, with aid of members (16) operable from the exterior of said connector device (1).

2. A connector device as claimed in claim 1,
**characterized therein**,
that the connector device (1) is a mainly parallel-epipedic member having a central bore (6, 7) extending therethrough in longitudinal direction, said bore having at one end a portion (6) of small diameter and at the other end a portion (7) of larger diameter,
that the element (24) for attaching the connector device (1) to the first profile (11) in end-to-end relation is a screw (24) arranged to extend through the central bore (6, 7), with its threaded end projecting out from the smaller bore (6) end to be screwed into a central channel (19) in a profile (11), and with its screw head positioned in the larger bore (7) and abutting the transition wall between said portions (6, 7) of the bore.

3. A connector device as claimed in claim 1 or 2,
**characterized therein**,
that the connector device (1) is a mainly parallel-epipedic member having a central bore (6, 7) extending therethrough in longitudinal direction, said bore having at one end a portion (6) of small diameter and at the other end a portion (7) of larger diameter,
that the T-connector member (13), has a mainly cylindrical body portion (12) arranged to be received in the larger diameter portion (7) of the bore, and with the thin element (14) projecting from the end of the connector device having the larger diameter opening (7).

4. A connector device as claimed in anyone of claims 1 to 3,
**characterized therein**,
that the openings (6, 7) in the connnector device (1) are arranged to receive simultaneously the element (24) intended for end-to-end connection with a first profile (11) and the T-connector (13) for connection with a second profile (18) in end-to-sideface relation.

5. A connector device as claimed in anyone of the preceeding claims,
**characterized therein**,
that the T-connector member (13) has a cylindrical body portion (12) and a thin, rhombic element (14) connected thereto via a short coaxially arranged shaft (15),
that the cylindrical body portion (12) of the T-connector being rotatably recieved in the larger diameter bore (7) of the connector device, and
that the the cylindrical body portion (12) has means (25) for causing rotation thereof, which means can be operated via a bore (10) perpendicularly to the larger diameter bore (7).

6. A connector device as claimed in claim 5,
**characterized therein**,
that the means for causing rotation of the T-connector body portion (12) in the larger diameter bore (7) is a tapering bore (25) the axis of which is arranged angularly displaced from the opposed long-sides of the thin rhombic element (14), and that a set screw (16) with pointed end is arranged to be tightenable through said perpendicular bore (10) for causing the T-connector (13) to rotate in the larger diameter bore (7) due to interaction between the point of said set screw (16) and the tapering wall of the tapering bore (25).
